# EUROPÄISCHE PATENTSCHRIFT

(11) **EP 3 608 484 B1**
(45) Veröffentlichungstag und Bekanntmachung des Hinweises auf die Patenterteilung: **11.01.2023**
(21) Anmeldenummer: 19188534.2
(22) Anmeldetag: 26.07.2019
(51) Int. Cl.: E04F 11/18, B62H 3/00, E01F 9/685, E04H 12/22, F21S 8/00, F21S 8/08, E01F 9/681

(54) **BAUSATZ ZUR BEFESTIGUNG VON GEGENSTÄNDEN, WIE GELÄNDERN, HANDLÄUFEN, SCHUTZBÜGELN, FAHRRADPARKERN, POLLERN, LEUCHTEN, SCHILDERN, ABFALLBEHÄLTERN, BÄNKEN O.DGL. MOBILIAR**
CONSTRUCTION KIT FOR FIXING OBJECTS, SUCH AS RAILINGS, HANDRAILS, PROTECTIVE COVERS, BICYCLE PARKING SPOTS, BOLLARDS, LIGHTS, SIGNS, WASTE CONTAINERS, BANKS OR THE LIKE
MODULE DE FIXATION DES OBJETS TELS QUE RAMBARDES, MAINS COURANTES, GARDES, SUPPORTS DE STATIONNEMENT POUR VÉLO, BITTES, LUMINAIRES, PANNAUX, POUBELLES À DÉCHETS, BANCS ETC

(30) Priorität: 06.08.2018 DE 102018119029
(43) Veröffentlichungstag der Anmeldung: 12.02.2020
(73) Patentinhaber: Barich, Lutz, 57250 Netphen (DE); Barich, Rotger, 54439 Saarburg-Kahren (DE)
(72) Erfinder: Barich, Lutz, 57250 Netphen (DE); Barich, Rotger, 54439 Saarburg-Kahren (DE)
(74) Vertreter: advotec.

(56) Entgegenhaltungen:
- DE-U1-202017 105 513
- FR-A1- 2 688 527
- US-A- 1 402 561
- US-A1- 2015 128 507

## Beschreibung

Die Erfindung betrifft einen Bausatz zur Befestigung von Gegenständen wie Geländern, Handläufen, Schutzbügeln, Fahrradparkern, Pollern, Leuchten, Schildern, Abfallbehältern, Bänken o.dgl. Mobiliar in einem Boden gemäß dem Oberbegriff des Patentanspruchs 1.

In oder auf Böden befestigbare Geländer, Handläufe, Schutzbügel, Fahrradparker, Poller, Leuchten, Schilder, Abfallbehälter, Bänke o. dgl. Mobiliar sind hinlänglich bekannt. Diese werden in einer Vielzahl von Ausführungen angeboten und kommen in der Regel an den unterschiedlichsten Orten zum Einsatz. So sind beispielsweise Fahrradparker bei öffentlichen Einrichtungen und Gebäuden, Geschäftshäusern und an vielen anderen Stellen sowie in privaten Außenbereichen vorzufinden.

Die vorgenannten Gegenstände können nach deren Befestigung im Bodenbereich mit einer Rosette versehen sein, die in der Regel gewöhnlich formschlüssig an dem jeweiligen Gegenstand gehalten ist. Bei einer vorübergehenden Entfernung eines oder mehrerer der Gegenstände werden in die Öffnungen im Boden Verschlusselemente eingesetzt und beispielsweise über federnde Klemmbügel in den Öffnungen gehalten. Alternativ dazu werden auch Abdeckkappen zum Verschließen der Öffnungen verwendet, die in dieselben eingesetzt werden. Bei beiden Varianten werden die Öffnungen verdeckt und ein Eindringen von Schmutz o.dgl. in dieselben soll so vermieden werden.

Die vorgenannten Abdeckungen (Rosette und Verschlusselemente) weisen jedoch den Nachteil auf, dass diese sich z. B. bei Kehrarbeiten insbesondere mittels Kehrmaschinen lösen können und dabei mit eingekehrt werden. Da dies zumeist nicht von dem jeweiligen Maschinenbediener wahrgenommen wird, sind die Abdeckungen unwiederbringlich verloren.

Die US 2015/0128507 A1 beschreibt eine einen starren Körper aufweisende Pfostenhülse, der bzw. die in den Boden einbaubar ist und zur strukturellen Stützung eines Pfostens vorgesehen ist. Dazu weist die Pfostenhülse bzw. der starre Körper derselben einen Pfostenaufnahmehohlraum zur Aufnahme eines Endes des Pfostens sowie eine Kennung mit Informationen über die Pfostenhülse auf. Zur Abdeckung des Randes der Pfostenhülse kann eine Randabdeckung vorgesehen sein, die am Pfostenkragen einrastet, wobei die obere Öffnung der Pfostenhülse bei Nichtbenutzung (ohne eingesetzten Pfosten) zudem mittels einer Hülsenkappe verschließbar ist.

Nachteilig ist hierbei die formschlüssige Verbindung der Randabdeckung sowie der Hülsenkappe, da sich diese bei den z. B. zuvor erwähnte Kehrarbeiten ohne Weiteres lösen können, wobei es zu einem sicheren Verlust der Randabdeckung und/oder der Hülsenkappe bei Nichtbenutzung (ohne eingesetzten Pfosten) kommt.

Der Erfindung liegt die Aufgabe zugrunde, einen Bausatz der angegebenen Gattung zu schaffen, mit dem einerseits ein sicherer und fester Stand eines Gegenstandes im Boden gewährleistet ist und andererseits Abdeckungen im Bereich von Öffnungen im Boden für in dieselben einsetzbare Holme des jeweiligen Gegenstandes bei eingesetzten Holmen und/oder auch bei nicht eingesetzten Holmen bereitgestellt werden, wobei ein dauerhafter Halt der Abdeckungen auch bei auf die Abdeckungen einwirkenden Kräften gewährleistet ist und jedwede Verschmutzung innerhalb der Öffnung weitestgehend ausgeschlossen ist.

Diese Aufgabe wird erfindungsgemäß durch einen Bausatz mit den Kennzeichnungsmerkmalen des Patentanspruchs 1 gelöst.

Zweckmäßige Weiterbildungen der Erfindung sind in den Unteransprüchen gekennzeichnet.

Der erfindungsgemäße Bausatz bzw. die Einbetthülse weist eine Klemmeinrichtung zum Festspannen eines vertikal gerichteten Holmes des jeweiligen Gegenstandes und/oder einer jeweiligen Abdeckeinrichtung auf, wobei die Abdeckeinrichtung eine Abdeckplatte aufweist, die in Gebrauchsanordnung auf die Oberseite einer Einbetthülse aufgesetzt ist. Hierbei ist auf der zu der Einbetthülse gerichteten Seite der Abdeckplatte ein Ansatz vorgesehen, der in einen inneren Kanal der Einbetthülse hineinragt und zwischen dem sich an einer Seite des inneren Kanals der Einbetthülse abstützenden, vertikal gerichteten Holm des jeweiligen Gegenstandes sowie der Klemmeinrichtung eingespannt ist.

Der erfindungsgemäße Bausatz weist mindestens eine die Oberseite der Einbetthülse bei nicht eingesetztem Holm abdeckende weitere Abdeckplatte auf, die in Gebrauchsanordnung unverlierbar mit der Einbetthülse verbunden ist und eine Abdeckplatte aufweist, die in Gebrauchsanordnung auf die Oberseite der Einbetthülse aufgesetzt ist. Dabei ist auf der zu der Einbetthülse gerichteten Seite der Abdeckplatte ein Ansatz vorgesehen, der in einen inneren Kanal der Einbetthülse hineinragt und zwischen einer Seite des inneren Kanals der Einbetthülse sowie der Klemmeinrichtung eingespannt ist.

Die Einbetthülse gewährleistet einen sicheren Stand des jeweiligen Gegenstandes, wobei ein Umkippen desselben verhindert wird bzw. ausgeschlossen ist und eine dauerhaltbare Öffnung zum Einsetzen von Holmen des jeweiligen Gegenstandes gebildet wird. Da eine ungeschützte Einbetthülse irreparabel durch Sand, Schmutz usw. beschädigt werden kann, wobei für eine Erneuerung bzw. Wiederinstandsetzung erhebliche Kosten auftreten, für die in öffentlichen Bereichen gewöhnlich Steuergelder genutzt werden müssen, sorgt die Abdeckeinrichtung bzw. sorgen die unterschiedlichen Abdeckeinrichtungen für einen Schutz des oberen Endes der Einbetthülse bzw. der Öffnung an dem oberen Ende der Einbetthülse sowie des Inneren der Einbetthülse vor Schmutz o.dgl. sowohl bei in die Öffnung eingesetztem Holm als auch bei entnommenem Holm, wobei die Abdeckeinrichtungen auch bei auf dieselben einwirkenden Kräften dauerhaft in der Einbetthülse gehalten wird.

Die Klemmeinrichtung gewährleistet einerseits einen sicheren Halt des jeweiligen Holms bzw. des Gegenstandes und/oder der jeweiligen Abdeckeinrichtung und verhindert weitestgehend andererseits eine widerrechtliche Entnahme des jeweiligen Holms bzw. Gegenstandes, wobei der sichere Stand desselben weiter verbessert ist.

Die Klemmeinrichtung kann aus einem sich einerseits an einer schiefen Ebene sowie andererseits an dem Ansatz angreifenden, sich an der Seite des inneren Kanals abstützenden bzw. über den vertikal gerichteten Holm des jeweiligen Gegenstandes an der Seite des inneren Kanals abstützenden Klemmelement bestehen, das mittels einer Spindel entlang der schiefen Ebene verschiebbar ausgebildet sein kann, wobei beim Verschieben des Klemmelementes der Ansatz allein bzw. der Ansatz gemeinsam mit dem vertikal gerichteten Holm des jeweiligen Gegenstandes in der Einbetthülse festklemmbar bzw. lösbar sein kann. Durch die Abstützung des Klemmelementes an der schiefen Ebene wird eine sichere und dauerhafte Klemmung sämtlicher Bauteile erreicht.

Das Klemmelement kann mit seiner zu dem Ansatz der Abdeckeinrichtung gerichteten Seite durch einen längsverlaufenden Schlitz in der Einbetthülse ragen, wobei die Spindel eine Schraube sein kann.

In eine Werkzeugaufnahme der Spindel zum Betätigen derselben mittels eines Werkzeugs kann ein Verschlusselement lösbar eingesetzt sein, das beispielsweise ein Stopfen sein kann. Das Verschlusselement sorgt dafür, dass in die Werkzeugaufnahme jederzeit nach dem Entfernen des Verschlusselementes ein entsprechendes Werkzeug eingesetzt werden kann, da eine Verschmutzung der Werkzeugaufnahme durch das dieselbe vorzugsweise nahezu vollständige verschließende Verschlusselement ausgeschlossen ist.

Der umlaufende Rand der Abdeckplatte kann den umlaufenden Rand der Einbetthülse mit der Klemmeinrichtung überragen. Diese Ausbildung sorgt für erweiterten Schutz gegen Schmutz o.dgl. am oberen Ende der Einbetthülse bzw. an der Öffnung an dem oberen Ende der Einbetthülse.

Die Abdeckplatte kann eine dieselbe durchdringende Bohrung für einen Zugriff der Spindel mittels eines Werkzeugs aufweisen. Durch die Bohrung kann sehr einfach ein Klemmen der Abdeckeinrichtung mit oder ohne einen Holm des jeweiligen Gegenstandes in der Einbetthülse oder ein Lösen derselben erfolgen.

Zur Vermeidung eines direkten Zugriffs durch Unbefugte kann auf der freien Oberseite der Abdeckplatte eine zumindest die Bohrung für das Werkzeug zum Betätigen der Spindel verschließende Abdeckung vorgesehen sein. Die Abdeckung sorgt zudem dafür, dass die Werkzeugaufnahme der Spindel nicht derart verschmutzt, dass die Funktion der Spindel nicht mehr gewährleistet ist.

Die Abdeckung kann bei einer ersten Ausführungsform, die sowohl bei nicht in die Einbetthülse eingesetztem Holm sowie bei in die Einbetthülse eingesetztem Holm Anwendung finden kann, ein form- und/oder kraftschlüssig in die Bohrung einsetzbarer und darin gehaltener Stopfen sein.

Bei einer weiteren Ausführungsform, die lediglich bei in die Einbetthülse eingesetztem Holm Anwendung finden kann, kann die Abdeckung aus einer auf die Abdeckplatte der Abdeckeinrichtung aufsetzbaren Platte gebildet sein, die eine dieselbe durchdringende Öffnung für den Durchtritt des vertikal gerichteten Holms des jeweiligen Gegenstandes aufweisen kann. Dabei kann auf der freien Seite der Platte eine den vertikal gerichteten Holm des jeweiligen Gegenstandes umschließende Rosette angeordnet sein.

Zum Festklemmen der Abdeckung an dem vertikal gerichteten Holm des jeweiligen Gegenstandes kann in eine radiale Gewindebohrung der Rosette eine Stiftschraube eingesetzt sein, die die Abdeckung gegen ein einfaches Entfernen sichert.

Vorzugsweise kann der umlaufenden Rand der Platte der Abdeckung dem umlaufenden Rand der Abdeckplatte der Abdeckeinrichtung entsprechen und so für ein sauberes Erscheinungsbild sorgen.

Nachfolgend werden anhand der Zeichnungen bevorzugte Ausführungsbeispiele des Bausatzes in Verbindung mit einem beispielsweise als Bügel ausgebildeten Fahrradparkers näher erläutert.

Es zeigen
- **Fig. 1**: eine Seitenansicht eines als Bügel ausgebildeten Fahrradparkers, der in in einem Boden vorgesehene Einbetthülsen eingesetzt ist,
- **Fig. 2**: eine Ansicht in Richtung des Pfeiles II in **Fig. 1****,**
- **Fig. 3**: einen vergrößerten Ausschnitt III aus **Fig. 1** in Schnittdarstellung mit in die Einbetthülse eingesetztem Holm des Fahrradparkers und eingesetzter Abdeckeinrichtung in geklemmter Stellung,
- **Fig. 4**: einen vergrößerten Ausschnitt in Schnittdarstellung wie in **Fig. 3** dargestellt, wobei jedoch in die Einbetthülse lediglich eine Abdeckeinrichtung eingesetzt und in der Einbetthülse festgeklemmt ist,
- **Fig. 5**: eine Draufsicht der Abdeckeinrichtung mit dieselbe durchdringendem Holm gemäß **Fig. 3**,
- **Fig. 6**: eine Draufsicht der Abdeckeinrichtung ohne dieselbe durchdringendem Holm gemäß **Fig. 4**,
- **Fig. 7**: eine Draufsicht einer eine Bohrung für ein Werkzeug in der Abdeckeinrichtung verschließenden Abdeckung mit Rosette für den Holm und
- **Fig. 8**: eine Ansicht in Richtung des Pfeiles VIII in **Fig. 7**.

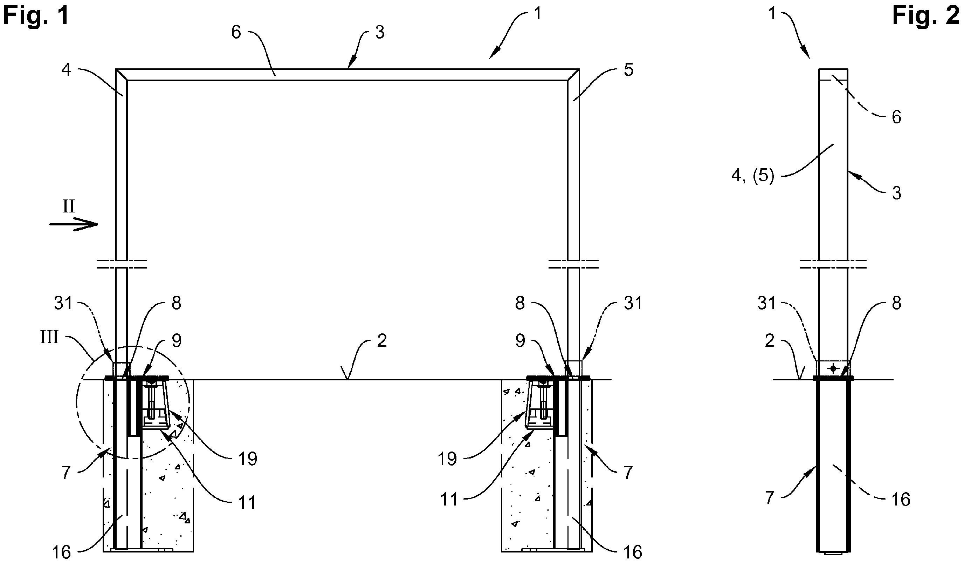

Der erfindungsgemäße Bausatz ist zur Befestigung von Gegenständen wie Geländern, Handläufen, Schutzbügeln, Fahrradparkern 1, Pollern, Leuchten, Schildern, Abfallbehältern, Bänken o.dgl. Mobiliar in einem Boden 2 vorgesehen. **Fig. 1** und **2** zeigen den Bausatz am Beispiel eines Fahrradparkers 1 zum Anlehnen und/oder Befestigen von Fahrrädern (nicht dargestellt), der als U-förmiger Bügel 3 ausgebildet ist und vorzugsweise in dem Boden 2 befestigbar ist. Der Bügel 3 besteht im Wesentlichen aus zwei seitlichen Holmen 4, 5 und einem die beiden seitlichen Holme 4, 5 verbindenden oberen Holm 6, wobei der Bügel 3 bzw. die Holme 4, 5 beispielsweise aus einem Rohrmaterial gebildet ist bzw. sind. Bei dem in **Fig. 1** und **2** dargestellten Fahrradparker 1 ist als Rohrmaterial z.B. ein Vierkantrohr gezeigt, wobei aber auch jeder andere Rohrquerschnitt Verwendung finden kann.

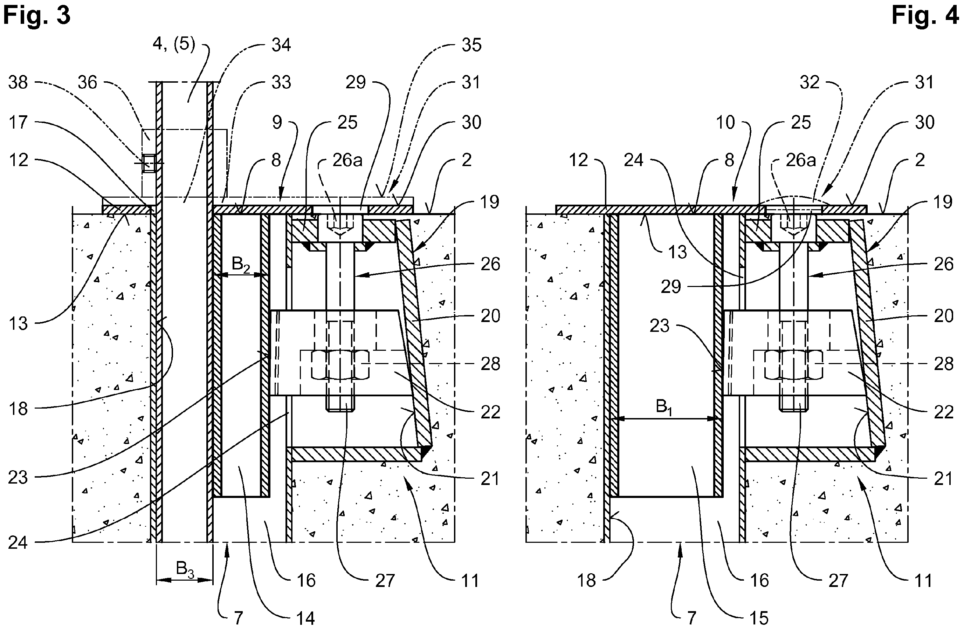

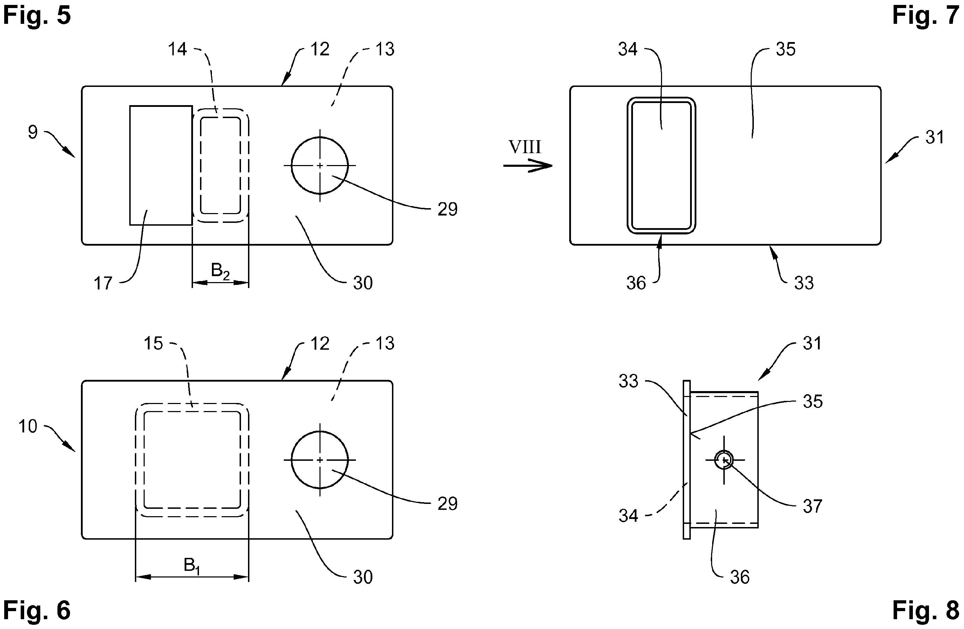

Der Bausatz, der in zwei Ausführungsformen angeboten werden kann, besteht bei der zweiten Ausführungsform aus mindestens einer in den Boden 2 einsetzbaren Einbetthülse 7 zur Aufnahme eines der seitlichen Holme 4, 5 des Bügels 3, mindestens einer die Oberseite 8 der Einbetthülse 7 bei eingesetztem Holm 4, 5 abdeckenden Abdeckeinrichtung 9 (siehe insbesondere **Fig. 3** und **5**) und mindestens einer die Oberseite 8 der Einbetthülse 7 bei nicht eingesetztem Holm 4, 5 abdeckenden weiteren Abdeckeinrichtung 10 (siehe insbesondere **Fig. 4** und **6**) wobei bei dem Bausatz nach der ersten Ausführungsform die die Oberseite 8 der Einbetthülse 7 bei nicht eingesetztem Holm 4, 5 abdeckende weitere Abdeckeinrichtung 10 nicht vorgesehen ist. Jede Abdeckeinrichtung 9, 10 ist in Gebrauchsanordnung unverlierbar über eine Klemmeinrichtung 11 mit der Einbetthülse 7 verbunden.

Zur Befestigung des Fahrradparkers 1 bzw. der seitlichen Holme 4, 5 des Bügels 3 werden zwei Bausätze benötigt, wobei je nach zu befestigendem Gegenstand mehr oder weniger Bausätze notwendig sein können. Bei dem dargestellten Fahrradparker 1 sind zwei Einbetthülsen 7 erforderlich, die in den Boden 2 eingesetzt und vorteilhaft in Beton verankert werden.

Jede Abdeckeinrichtung 9, 10 weist eine den umlaufenden Rand der Einbetthülse 7 mit der Klemmeinrichtung 11 überragende Abdeckplatte 12 mit einem auf deren zu der Einbetthülse 7 gerichteten Seite 13 vorgesehenen Ansatz 14, 15 auf, der ebenfalls aus einem Rohrmaterial (z.B. Vierkantrohr) gebildet ist und beispielsweise an die zu der Einbetthülse 7 gerichteten Seite 13 der Abdeckplatte 12 angeschweißt ist. Vor der Montage des Fahrradparkers 1 bzw. der seitlichen Holme 4, 5 des Bügels 3 wird jeweils eine Abdeckeinrichtung 9 auf die Oberseite 8 der Einbetthülse 7 aufgesetzt, wobei der Ansatz 14 jeweils in einen inneren, vertikal gerichteten Kanal 16 der Einbetthülsen 7 hineinragt.

Zum Einstecken der seitlichen Holme 4, 5 des Bügels 3 in die Einbetthülsen 7 weist die Abdeckeinrichtung 9 (siehe insbesondere **Fig. 3** und **5**) eine die Abdeckplatte 12 durchdringende Öffnung 17 auf, durch die die Holme 4, 5 des Bügels 3 bis in die inneren, vertikal gerichteten Kanäle 16 der Einbetthülsen 7 hineinragen. Bei der Befestigung der Abdeckeinrichtungen 9 werden die Ansätze 14 der Abdeckeinrichtungen 9 jeweils zwischen dem sich an einer Seite 18 des inneren, vertikal gerichteten Kanals 16 der Einbetthülse 7 abstützenden, vertikal gerichteten Holm 4, 5 des Bügels 3 und der Klemmeinrichtung 11 eingespannt, wobei selbstverständlich gleichzeitig die Befestigung des Holms 4, 5 des Bügels 3 erfolgt.

Die Klemmeinrichtung 11 (siehe insbesondere **Fig. 3** und **4**) besteht aus einem seitlich an der Einbetthülse 7 angeordneten, geschlossenen Gehäuse 19, dessen von der Einbetthülse 7 abgewandte seitliche Außenwand 20 eine schiefe Ebene 21 bildet. In dem Gehäuse 19 ist ein Klemmelement 22 eingesetzt, das sich einerseits an der schiefen Ebene 21 und andererseits an dem Ansatz 14, 15 der Abdeckeinrichtung 9, 10 abstützt, wobei das Klemmelement 22 mit seiner zu dem Ansatz 14, 15 der Abdeckeinrichtung 9, 10 gerichteten Seite 23 durch einen längsverlaufenden Schlitz 24 in der Einbetthülse 7 ragt. Das Klemmelement 22 ist mittels einer in der oberen Außenwand 25 des Gehäuses 19 drehbar gelagerten, in Längsrichtung gegen Verschiebung gesicherten Spindel 26, die eine Schraube sein kann, verschiebbar, wobei das freie Ende 27 der Spindel 26 in einer in dem Klemmelement 22 in radialer Richtung verschiebbaren und gegen Drehung gesicherten Spindelmutter 28 gelagert ist. Beim vertikalen Verschieben des Klemmelementes 22 durch Drehung der Spindel 26 wird das Klemmelement 22 über die schiefe Ebene 21 in Richtung des Ansatzes 14 der Abdeckeinrichtung 9 sowie des seitlichen Holmes 4, 5 des Bügels 3 verschoben und der Ansatz 14 der Abdeckeinrichtung 9 sowie der seitliche Holm 4, 5 des Bügels 3 in der Einbetthülse 7 bzw. an der Seite 18 des inneren, vertikal gerichteten Kanals 16 derselben festgeklemmt (siehe **Fig. 3**). Ein Lösen des Ansatzes 14 der Abdeckeinrichtung 9 sowie des seitlichen Holmes 4, 5 des Bügels 3 erfolgt durch Drehung der Spindel 26 und gleichzeitigem Verschieben des Klemmelementes 22 in der entgegengesetzten Richtung.

Im Falle einer vorübergehenden Außerbetriebnahme des Fahrradparkers 1 durch Entfernung desselben bzw. des Bügels 3 werden nach der Entnahme des Bügel 3 aus den Einbetthülsen 7 die Abdeckeinrichtung 10 mit ihrem Ansatz 15, dessen Breite B₁ der Summe aus der Breite B₂ des Ansatzes 14 der Abdeckeinrichtung 9 und Breite B₃ des seitlichen Holmes 4, 5 des Bügels 3 entspricht, in die Einbetthülse 7 bzw. in den inneren, vertikal gerichteten Kanal 16 eingesetzt. Hierbei wird beim vertikalen Verschieben des Klemmelementes 22 durch Drehung der Spindel 26 das Klemmelement 22 über die schiefe Ebene 21 in Richtung des Ansatzes 15 der Abdeckeinrichtung 10 verschoben und der Ansatz 15 der Abdeckeinrichtung 10 in der Einbetthülse 7 bzw. an der Seite 18 des inneren, vertikal gerichteten Kanals 16 derselben festgeklemmt (siehe **Fig. 4**). Ein Lösen des Ansatzes 15 der Abdeckeinrichtung 10 erfolgt durch Drehung der Spindel 26 und gleichzeitigem Verschieben des Klemmelementes 22 in der entgegengesetzten Richtung. Die bei der Außerbetriebnahme nicht benötigten Abdeckeinrichtungen 9 können gemeinsam mit dem Fahrradparker 1 eingelagert werden.

Wie sehr leicht zu erkennen ist, sorgen die Abdeckeinrichtungen 9, 10 für eine Kapselung des Inneren der Einbetthülse 7, wodurch Schmutz usw. nicht in das Innere der Einbetthülse eindringen kann und somit die Mechanik in der Einbetthülse dauerhaft geschützt ist.

Damit ein Zugriff auf die Spindel 26 der Klemmeinrichtung 11 und somit ein Klemmen und Lösen derselben mittels eines Werkzeuges jederzeit gewährleistet ist, weisen die Abdeckplatten 12 der Abdeckeinrichtungen 9, 10 jeweils eine die Abdeckplatten 9, 10 durchdringende, koaxial zu der Spindel 26 angeordnete Bohrung 29 für den Durchtritt des Werkzeugs auf (siehe **Fig. 3** bis **6**).

Um die Werkzeugaufnahme 26a der Spindel 26 vor Schmutz o.dgl. zu schützen und somit die Werkzeugaufnahme 26a zugriffsbereit zu halten, kann in die Werkzeugaufnahme 26a der Spindel 26 ein Verschlusselement lösbar eingesetzt werden, das beispielsweis ein Stopfen sein kann (nicht dargestellt). Des Weiteren kann zudem auf der freien Oberseite 30 jeder Abdeckplatte 12 eine zumindest die Bohrung 29 für das Werkzeug verschließende Abdeckung 31 vorgesehen sein, die bei nicht in die Einbetthülsen 7 eingesetzten Holmen 4, 5 ein form- und/oder kraftschlüssig in die Bohrung 29 einsetzbarer und darin gehaltener weiterer Stopfen 32 sein kann (in **Fig. 4** strichpunktiert dargestellt).

Bei in die Einbetthülsen 7 eingesetzten Holmen 4, 5 kann die Abdeckung 31 aus einer auf die Abdeckplatte 12 der Abdeckeinrichtung 9 aufsetzbaren und an den umlaufenden Rand der Abdeckplatte 12 der Abdeckeinrichtung 9 angepassten Platte 33 gebildet sein, die eine dieselbe durchdringende Öffnung 34 für den Durchtritt des vertikal gerichteten Holms 4, 5 des Bügels 3 aufweist. Auf der freien Seite 35 der Platte 33 ist eine den vertikal gerichteten Holm 4, 5 des Bügels 3 umschließende Rosette 36 angeordnet bzw. angeschweißt. Diese Abdeckung 31 muss vor dem Einsetzen der Holme 4, 5 des Bügels 3 in die Einbetthülsen 7 an den Holmen 4, 5 des Bügels 3 angebracht werden, wobei die Holme 4, 5 die Öffnung 34 und die Rosette 36 durchdringen. Zur Sicherung der Abdeckung 31 an dem jeweiligen Holm 4, 5 des Bügels 3 weist die Rosette 36 eine radiale Gewindebohrung 37 auf, in die eine Stiftschraube 38 zum Festklemmen der Abdeckung 31 an dem vertikal gerichteten Holm 4, 5 des Bügels 3 eingesetzt ist (siehe insbesondere **Fig. 3**, **7** und **8** - in **Fig. 3** strichpunktiert dargestellt).

## Patentansprüche

1. Bausatz zur Befestigung von Gegenständen wie Geländern, Handläufen, Schutzbügeln, Fahrradparkern (1), Pollern, Leuchten, Schildern, Abfallbehältern, Bänken o.dgl. Mobiliar in einem Boden (2), wobei der Bausatz aus mindestens einer in den Boden (2) einsetzbaren Einbetthülse (7) zur Aufnahme eines vertikal gerichteten Holmes (4, 5) des jeweiligen Gegenstandes und mindestens einer die Oberseite (8) der Einbetthülse (7) bei eingesetztem Holm (4, 5) abdeckenden Abdeckeinrichtung (9) gebildet ist, und wobei die Abdeckeinrichtung (9) in Gebrauchsanordnung unverlierbar mit der Einbetthülse (7) verbunden ist,
und wobei die Einbetthülse (7) eine Klemmeinrichtung (11) zum Festspannen des vertikal gerichteten Holmes (4, 5) des jeweiligen Gegenstandes und/oder der jeweiligen Abdeckeinrichtung (9) aufweist,
**dadurch gekennzeichnet,**
**dass** die Abdeckeinrichtung (9) eine Abdeckplatte (12) aufweist, die in Gebrauchsanordnung auf die Oberseite (8) der Einbetthülse (7) aufgesetzt ist, wobei auf der zu der Einbetthülse (7) gerichteten Seite (13) der Abdeckplatte (12) ein Ansatz (14) vorgesehen ist, der in einen inneren Kanal (16) der Einbetthülse (7) hineinragt und zwischen dem sich an einer Seite (18) des inneren Kanals (16) der Einbetthülse (7) abstützenden, vertikal gerichteten Holm (4, 5) des jeweiligen Gegenstandes sowie der Klemmeinrichtung (11) eingespannt ist.

2. Bausatz nach Anspruch 1,
**dadurch gekennzeichnet,**
**dass** der Bausatz mindestens eine die Oberseite (8) der Einbetthülse (7) bei nicht eingesetztem Holm (4, 5) abdeckende weitere Abdeckeinrichtung (10) aufweist, die in Gebrauchsanordnung unverlierbar mit der Einbetthülse (7) verbunden ist und eine Abdeckplatte (12) aufweist, die in Gebrauchsanordnung auf die Oberseite (8) der Einbetthülse (7) aufgesetzt ist, wobei auf der zu der Einbetthülse (7) gerichteten Seite (13) der Abdeckplatte (12) ein Ansatz (15) vorgesehen ist, der in einen inneren Kanal (16) der Einbetthülse (7) hineinragt und zwischen einer Seite (18) des inneren Kanals (16) der Einbetthülse (7) sowie der Klemmeinrichtung (11) eingespannt ist.

3. Bausatz nach Anspruch 1 oder 2,
**dadurch gekennzeichnet,**
**dass** die Klemmeinrichtung (11) aus einem sich einerseits an einer schiefen Ebene (21) sowie andererseits an dem Ansatz (14, 15) angreifenden, sich an der Seite (18) des inneren Kanals (16) abstützenden bzw. über den vertikal gerichteten Holm (4, 5) des jeweiligen Gegenstandes an der Seite (18) des inneren Kanals (16) abstützenden Klemmelement (22) besteht, das mittels einer Spindel (26) entlang der schiefen Ebene (21) verschiebbar ausgebildet ist, wobei beim Verschieben des Klemmelementes (22) der Ansatz (15) allein bzw. der Ansatz (14) gemeinsam mit dem vertikal gerichteten Holm (4, 5) des jeweiligen Gegenstandes in der Einbetthülse (7) festklemmbar bzw. lösbar ist.

4. Bausatz nach Anspruch 3,
**dadurch gekennzeichnet,**
**dass** das Klemmelement (22) mit seiner zu dem Ansatz (14, 15) der Abdeckeinrichtung (9, 10) gerichteten Seite (23) durch einen längsverlaufenden Schlitz (24) in der Einbetthülse (7) ragt.

5. Bausatz nach Anspruch 3 oder 4,
**dadurch gekennzeichnet,**
**dass** die Spindel (26) eine Schraube ist.

6. Bausatz nach einem der Ansprüche 3 bis 5,
**dadurch gekennzeichnet,**
**dass** in eine Werkzeugaufnahme (26a) der Spindel (26) zum Betätigen derselben mittels eines Werkzeugs ein Verschlusselement lösbar eingesetzt ist.

7. Bausatz nach Anspruch 6,
**dadurch gekennzeichnet,**
**dass** das Verschlusselement ein Stopfen ist.

8. Bausatz nach einem der Ansprüche 1 bis 7
**dadurch gekennzeichnet,**
**dass** der umlaufenden Rand der Abdeckplatte (12) den umlaufenden Rand der Einbetthülse (7) mit der Klemmeinrichtung (11) überragt.

9. Bausatz nach einem der Ansprüche 3 bis 8,
**dadurch gekennzeichnet,**
**dass** die Abdeckplatte (12) eine dieselbe durchdringende Bohrung (29) für einen Zugriff der Spindel (26) mittels eines Werkzeugs aufweist.

10. Bausatz nach Anspruch 9,
**dadurch gekennzeichnet,**
**dass** auf der freien Oberseite (30) der Abdeckplatte (12) eine zumindest die Bohrung (29) für das Werkzeug zum Betätigen der Spindel (26) verschließende Abdeckung (31) vorgesehen ist.

11. Bausatz nach Anspruch 10,
**dadurch gekennzeichnet,**
**dass** die Abdeckung (31) ein form- und/oder kraftschlüssig in die Bohrung (29) einsetzbarer und darin gehaltener Stopfen (32) ist.

12. Bausatz nach Anspruch 10,
**dadurch gekennzeichnet,**
**dass** die Abdeckung (31) aus einer auf die Abdeckplatte (12) der Abdeckeinrichtung (9) aufsetzbaren Platte (33) gebildet ist, die eine dieselbe durchdringende Öffnung (34) für den Durchtritt des vertikal gerichteten Holms (4, 5) des jeweiligen Gegenstandes aufweist, wobei auf der freien Seite (35) der Platte (33) eine den vertikal gerichteten Holm (4, 5) des jeweiligen Gegenstandes umschließende Rosette (36) angeordnet ist.

13. Bausatz nach Anspruch 12,
**dadurch gekennzeichnet,**
**dass** in eine radiale Gewindebohrung (37) der Rosette (36) eine Stiftschraube (38) zum Festklemmen der Abdeckung (31) an dem vertikal gerichteten Holm (4, 5) des jeweiligen Gegenstandes eingesetzt ist.

14. Bausatz nach Anspruche 12 oder 13
**dadurch gekennzeichnet,**
**dass** der umlaufenden Rand der Platte (33) der Abdeckung (31) dem umlaufenden Rand der Abdeckplatte (12) der Abdeckeinrichtung (9) entspricht.

## Claims

1. A kit for anchoring objects, such as railings, handrails, safety bars, bicycle stands (1), bollards, lamps, signs, waste bins, banks or similar furniture, in a ground (2), the kit being composed of at least one embedding sleeve (7) configured to be inserted into the ground (2) and serving to accommodate a vertically oriented post (4, 5) of the object in question and at least one cover device (9) covering the top (8) of the embedding sleeve (7) when the post (4, 5) is inserted, the cover device (9) being captively connected to the embedding sleeve (7) when in the use state, and the embedding sleeve (7) having a clamping device (11) for clamping the vertically oriented post (4, 5) of the object in question and/or the cover device (9) in question, **characterized in that**
the cover device (9) has a cover plate (12) placed on the top (8) of the embedding sleeve (7) when in the use state, a projection (14) being provided on the side (13) of the cover plate (12) facing the embedding sleeve (7), the projection (14) projecting into an inner channel (16) of the embedding sleeve (7) and being clamped between the vertically oriented post (4, 5) of the object in question, which is supported on a side (18) of the inner channel (16) of the embedding sleeve (7), and the clamping device (11).

2. The kit according to claim 1,
**characterized in that**
the kit has at least one other cover device (10), which covers the top (8) of the embedding sleeve (7) when no post (4, 5) is inserted and which is captively connected to the embedding sleeve (7) when in the use state and which has a cover plate (12) placed on the top (8) of the embedding sleeve (7) when in the use state, a projection (15) being provided on the side (13) of the cover plate (12) facing the embedding sleeve (7), the projection (15) projecting into an inner channel (16) of the embedding sleeve (7) and being clamped between a side (18) of the inner channel (16) of the embedding sleeve (7) and the clamping device (11).

3. The kit according to claim 1 or 2,
**characterized in that**
the clamping device (11) is composed of a clamping element (22) which engages an inclined plane (21) on one side and the projection (14, 15) on the other side and which is supported on the side (18) of the inner channel (16) or which is supported on the side (18) of the inner channel (16) via the vertically oriented post (4, 5) of the object in question, the clamping element (22) being configured to be shifted along the inclined plane (21) by means of a spindle (26), the shifting of the clamping element (22) allowing the projection (15) alone or the projection (15) and the vertically oriented post (4, 5) of the object in question together to be clamped in the embedding sleeve (7) or released.

4. The kit according to claim 3,
**characterized in that**
a side (23) of the clamping element (22) facing the projection (14, 15) of the cover device (9, 10) projects through a longitudinal slot (24) in the embedding sleeve (7).

5. The kit according to claim 3 or 4,
**characterized in that**
the spindle (26) is a screw.

6. The kit according to any one of claims 3 to 5,
**characterized in that**
a closure element is removably inserted into a tool mount (26a) of the spindle (26) for operating the spindle (26) by means of a tool.

7. The kit according to claim 6,
**characterized in that**
the closure element is a plug.

8. The kit according to any one of claims 1 to 7,
**characterized in that**
the circumferential edge of the cover plate (12) protrudes over the circumferential edge of the embedding sleeve (7) with the clamping device (11).

9. The kit according to any one of claims 3 to 8,
**characterized in that**
the cover plate (12) has a bore (29), which penetrates the cover plate (12), for an access of the spindle (26) by means of a tool.

10. The kit according to claim 9,
**characterized in that**
a cover (31) covering at least the bore (29) for the tool for operating the spindle (26) is provided on the free top (30) of the cover plate (12).

11. The kit according to claim 10,
**characterized in that**
the cover (31) is a plug (32) configured to be inserted into the bore (29) in a form-fitting and/or force-fitting manner and held therein.

12. The kit according to claim 10,
**characterized in that**
the cover (31) is composed of a plate (33) configured to be placed on the cover plate (12) of the cover device (9), the plate (33) having an opening (34), which penetrates the plate (33), for the passage of the vertically oriented post (4, 5) of the object in question, a collar (36) surrounding the vertically oriented post (4, 5) of the object in question being disposed on the free side (35) of the plate (33).

13. The kit according to claim 12,
**characterized in that**
a stud screw (38) for clamping the cover (31) to the vertically oriented post (4, 5) of the object in question is inserted into a radial threaded bore (37) of the collar (36).

14. The kit according to claim 12 or 13,
**characterized in that**
the circumferential edge of the plate (33) of the cover (31) corresponds to the circumferential edge of the cover plate (12) of the cover device (9).

## Revendications

1. Kit de fixation d'objets, tels que des balustrades, des mains courants, des étriers de protection, des range-vélos (1), des bollards, des lampes, des panneaux, des poubelles, des bancs ou du mobilier semblable, dans une terre (2), le kit se composant d'au moins une douille d'encastrement (7) configurée pour être insérée dans la terre (2) et servant à recevoir un montant vertical (4, 5) de l'objet respectif et au moins un dispositif de recouvrement (9) couvrant le dessus (8) de la douille d'encastrement (7) quand le montant (4, 5) est inséré, le dispositif de recouvrement (9) étant relié de manière imperdable à la douille d'encastrement (7) dans l'état d'utilisation et la douille d'encastrement (7) ayant un dispositif de serrage (11) pour serrer le montant vertical (4, 5) de l'objet respectif et/ou le dispositif de recouvrement (9) respectif,
**caractérisé en ce que**
le dispositif de recouvrement (9) a une plaque de recouvrement (12) posée sur le dessus (8) de la douille d'encastrement (7) dans l'état d'utilisation, un épaulement (14) étant disposé sur le côté (13) de la plaque de recouvrement (12) tourné vers la douille
d'encastrement (7), l'épaulement (14) faisant saillie dans un canal intérieur (16) de la douille d'encastrement (7) et étant serré entre le montant vertical (4, 5) de l'objet respectif, qui s'appuie sur un côté (18) du canal intérieur (16) de la douille d'encastrement (7), et le dispositif de serrage (11).

2. Kit selon la revendication 1,
**caractérisé en ce que**
le kit a au moins un autre dispositif de recouvrement (10), qui couvre le dessus (8) de la douille d'encastrement (7) quand aucun montant (4, 5) n'est inséré et qui est relié de manière imperdable à la douille d'encastrement (7) dans l'état d'utilisation et qui a une plaque de recouvrement (12) posée sur le dessus (8) de la douille d'encastrement (7) dans l'état d'utilisation, un épaulement (15) étant disposé sur le côté (13) de la plaque de recouvrement (12) tourné vers la douille d'encastrement (7), l'épaulement (15) faisant saillie dans un canal intérieur (16) de la douille d'encastrement (7) et étant serré entre un côté (18) du canal intérieur (16) de la douille d'encastrement (7) et le dispositif de serrage (11).

3. Kit selon la revendication 1 ou 2,
**caractérisé en ce que**
le dispositif de serrage (11) se compose d'un élément de serrage (22) qui vient en prise sur un plan incliné (21) d'un côté et sur l'épaulement (14, 15) de l'autre côté et qui s'appuie sur le côté (18) du canal intérieur (16) ou qui s'appuie sur le côté (18) du canal intérieur (16) par l'intermédiaire du montant vertical (4, 5) de l'objet respectif, l'élément de serrage (22) étant configuré pour être déplacé le long du plan incliné (21) au moyens d'une broche (26), le déplacement de l'élément de serrage (22) permettant seulement à l'épaulement (15) ou à l'épaulement (15) et au montant vertical (4, 5) de l'objet respectif ensemble d'être serré(s) dans la douille d'encastrement (7) ou d'être déclenché(s).

4. Kit selon la revendication 3,
**caractérisé en ce**
**qu'**un côté (23) de l'élément de serrage (22) tourné vers l'épaulement (14, 15) du dispositif de recouvrement (9, 10) fait saillie à travers une fente longitudinale (24) dans la douille d'encastrement (7).

5. Kit selon la revendication 3 ou 4,
**caractérisé en ce que**
la broche (26) est une vis.

6. Kit selon l'une quelconque des revendications 3 à 5,
**caractérisé en ce**
**qu'**un élément de fermeture est inséré de manière amovible dans un porte-outil (26a) de la broche (26) pour faire fonctionner la broche (26) au moyen d'un outil.

7. Kit selon la revendication 6,
**caractérisé en ce que**
l'élément de fermeture est un bouchon.

8. Kit selon l'une quelconque des revendications 1 à 7,
**caractérisé en ce que**
le bord circonférentiel de la plaque de recouvrement (12) dépasse le bord circonférentiel de la douille d'encastrement (7) avec le dispositif de serrage (11).

9. Kit selon l'une quelconque des revendications 3 à 8,
**caractérisé en ce que**
la plaque de recouvrement (12) a un trou (29), qui pénètre celle-ci, pour un accès de la broche (26) au moyens d'un outil.

10. Kit selon la revendication 9,
**caractérisé en ce**
**qu'**une couverture (31) couvrant au moins le trou (29) pour l'outil pour faire fonctionner la broche (26) est disposée sur le dessous (30) libre de la plaque de recouvrement (12).

11. Kit selon la revendication 10,
**caractérisé en ce que**
la couverture (31) est un bouchon (32) configuré pour être inséré dans le trou (29) par liaison par forme et/ou par force et retenue dans celui-ci.

12. Kit selon la revendication 10,
**caractérisé en ce que**
la couverture (31) se compose d'une plaque (33) configurée pour être posée sur la plaque de recouvrement (12) du dispositif de recouvrement (9), la plaque (33) ayant une ouverture (34), qui pénètre la plaque (33), pour le passage du montant vertical (4, 5) de l'objet respectif, une rosette (36) entourant le montant vertical (4, 5) de l'objet respectif étant disposée sur le côté (35) libre de la plaque (33).

13. Kit selon la revendication 12,
**caractérisé en ce**
**qu'**un goujon fileté (38) pour serrer la couverture (31) au montant vertical (4, 5) de l'objet respectif est inséré dans un trou fileté (37) radial de la rosette (36).

14. Kit selon la revendication 12 ou 13,
**caractérisé en ce que**
le bord circonférentiel de la plaque (33) de la couverture (31) correspond au bord circonférentiel de la plaque de recouvrement (12) du dispositif de recouvrement (9).
